# EUROPEAN PATENT SPECIFICATION

(11) **EP 1 917 583 B1**
(45) Date of publication and mention of the grant of the patent: **30.05.2012**
(21) Application number: 06813421.2
(22) Date of filing: 14.08.2006
(51) Int. Cl.: G06F 9/445

(54) **CONNECTION OF PERIPHERALS TO OPERATING SYSTEMS**
ANSCHLUSS VON PERIPHERIEGERÄTEN AN BETRIEBSSYSTEME
CONNEXION DE PERIPHERIQUES SUR DES SYSTEMES D'EXPLOITATION

(30) Priority: 23.08.2005 US 710475 P
(43) Date of publication of application: 07.05.2008
(73) Proprietor: MCCI Corporation, Ithaca, NY 14850 (US)
(72) Inventor: SCAFFIDI, Salvatore, Gregory, Jr., Leander, Texas 74641 (US)
(74) Representative: Rupprecht, Kay
(86) International application number: PCT/US2006/031673
(87) International publication number: WO 2007/024544

(56) References cited:
- US-A1- 2003 095 279
- MICROSOFT: "How plug and play works"[Online] 28 March 2003 (2003-03-28), pages 1-10, XP002411725 Retrieved from the Internet: URL:http://technet2.microsoft.com/WindowsS erver/en/library/8c5274be-2174-4205-83cd-0 8304633b5a31033.mspx?pf=true#w2k3tr_pnp_ho w_lbrv> [retrieved on 2006-12-14]
- LEE FISHER: "Win32 Application Support for Plug and Play"[Online] 18 January 1995 (1995-01-18), pages 1-10, XP002411726 Retrieved from the Internet: URL:http://msdn2.microsoft.com/en-us/libra ry/ms810038.aspx> [retrieved on 2006-12-14]
- GAMMA, HELM, JOHNSON, VLISSIDES: "Design Patterns" 1995, ADDISON WESLEY LONGMAN INC. , READING, MASSACHUSETTS , XP002411445 ISBN: 0 201 63361 2 pages VII-IX pages 273-282

## Description

### Field of the Invention

This invention relates to virtual ports connecting peripheral devices to computers. More particularly, it relates to a device driver arrangement that retains a virtual serial port when a peripheral device is disconnected from the computer.

### Background Information

In the past, and to some extent the present, peripheral devices have been connected to computers by way of hardware serial ports designated with "com port" numbers. The software applications that make use of these peripheral devices communicate with them by way of software devices drivers. These peripheral devices are termed "built in" because the system will not respond to the plugging or unplugging of the devices while system is operating.

More recently, "hot-pluggable" devices have been introduced by way of USB (Universal Serial Bus) hardware ports and "Plug-N-Play" software included with operating systems such as the Windows 2000^{™} and Windows XP^{™} systems marketed by Microsoft Corporation (XP-002411725). When a hot-pluggable device is connected to the computer, the operating system kernel installs a device driver particular to that device. In this case the driver also functions as a virtual com port that interacts with the user application as though it were a hardware com port in a built in arrangement.

If the device is detached from the computer during computer operation, the computer causes the associated driver to remove itself and this removes the virtual com port function provided by the driver. This may cause malfunction because some applications, require a com port connection even if a corresponding device has been detached.

Additionally, there are services providing the ability of printing regardless of the connection state of the printer. A respective service is described in US 2003/0095279 A1. The service accepts a print command issued by a user. The data of the respective print job is then spooled and transmitted to the printer. If an error occurs, it is checked whether the error can be automatically corrected. Otherwise the data of the print job is stored as a temporary file such that the user is able to request a reprint of the respective job without having to provide the respective data. After a print job has successfully terminated the temporary file is removed from the file system.

Starting from the known operating system, which installs a device driver and provides a virtual com port for interaction with a user application, it is an objective of the present invention to provide an improved system for emulating a com port. This problem is solved by the driver system of claim 1.

### SUMMARY OF THE INVENTION

In essence the invention involves splitting the device driver into two parts. One of these, which may be termed the "com interface part," provides the "com" interface to the associated application; the other, which may be termed the "driver port," provides communication with peripheral device. These two parts communicate with each other and, to the user application that uses the driver they appear to be a typical device driver. The com interface part performs additional functions, as do other software modules described herein.

When a peripheral device is plugged into a USB port, it is detected by the operating system, which communicates with the device to obtain information that is used in selecting a device driver for the device and loading the driver into the computer memory. The user application that communicates with the peripheral device is notified as before and communications between the application and the peripheral device pass through the driver. This procedure is common to computer operating systems.

However, the device driver provided by the present invention functions differently when a hot pluggable" peripheral device is unplugged during computer operation. Specifically, as before, the operating system senses the removal of the peripheral device. It then orders the device driver to remove itself. Prior to the invention, the device driver released its memory space and thus removed the com port with which the application communicated. Unless the application was written or rewritten to cope with a com port removal, a malfunction could result.

However, the device driver described herein responds by removing only the portion that communicates with the removed device. It does not release the memory space containing the com port. Accordingly, the application can continue to communicate with the driver as though the peripheral device had not been unplugged. It will, of course, not reach the peripheral device itself and therefore will operate as though the device has malfunctioned. Alternatively, the driver can be configured to provide the application with responses that are more suitable for the particular application.

### BRIEF DESCRIPTION OF THE DRAWINGS

The invention description below refers to the accompanying drawings, of which:
Fig. 1 is a block diagram of the software involved in a typical prior USB port arrangement; and
Fig. 2 is a block diagram of typical USB port arrangement incorporating the invention.

### DETAILED DESCRIPTION OF AN ILLUSTRATIVE EMBODIMENT

The following description is directed specifically to Microsoft Corporation Operating Systems. These systems are well known to those who write software that interfaces with the operating system kernel. Except for those modules provided by the invention, the various software modules referred to herein have been published by Microsoft Corporation.

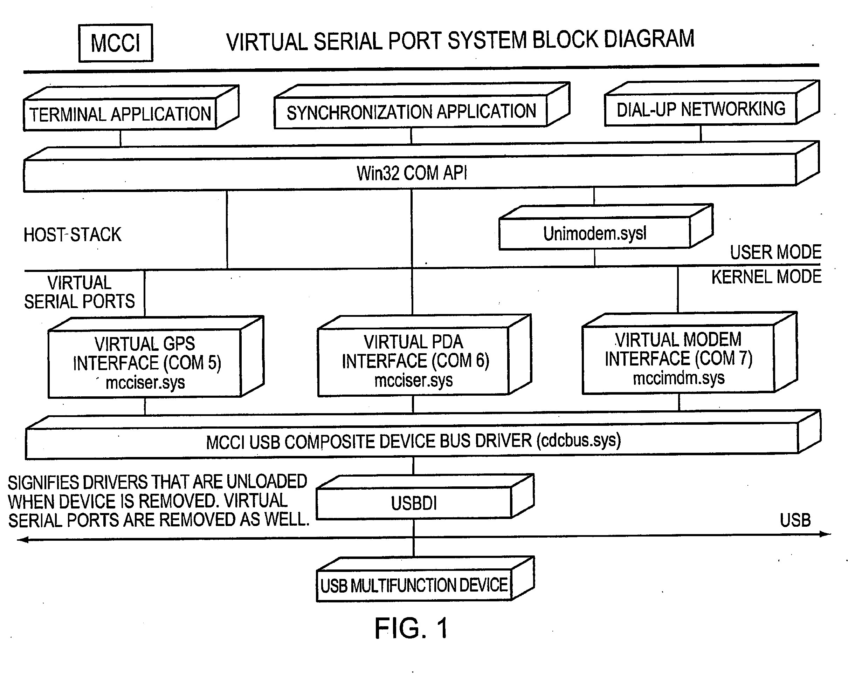

Fig. 1 depicts a prior arrangement for communication between applications such as a GPS map application 10A a synchronization application 10B and a dial-up network utility 10C, on the one hand, and a USB multifunction device 12 plugged into a USB 13. The application 10A communicates with a GPS receiver function of the device 12 to provide a various map functions on the computer display. The application 10B is used to synchronize the data in a computer with a device (not shown), such as a personal digital assistant (PDA). A dial-up network utility 10C communicates with a modem function of the device 12.

The applications are interfaced with the operating system kernel (not shown) by a win 32 com API (application program interface) 14. The API 14, in turn, communicates with device drivers 16A, 16B, and 16C, which also function as virtual com ports for the applications. The communication path is completed by a composite USB bus driver 18, which includes driver stacks (not shown) for incoming and outgoing data and, by a USB driver interface (USBDI) 20.

Alternatively, instead of using a single multifunction USB device, the peripheral arrangement may be configured with separate physical USB ports, with the devices that provide the respective functions being plugged into those ports.

When the system is turned on or restarted, the USBDI 20 checks the peripheral bus 13 for USB devices. It interrogates the devices that it finds and identifies them to the kernel. The kernel than loads the relevant drivers (e.g. the drivers 16A, 16B and 16C) into memory and provides the API 14 with the addresses of these drivers. The applications can then communicate with the respective peripheral functions.

Removal of the device 12 during computer operation is detected by the USBDI 20, which informs the kernel of the removal. The kernel then signals the device drivers 16A 16B and 16C to release their memory space, thereby removing the drivers. As discussed above, this may cause a computer malfunction.

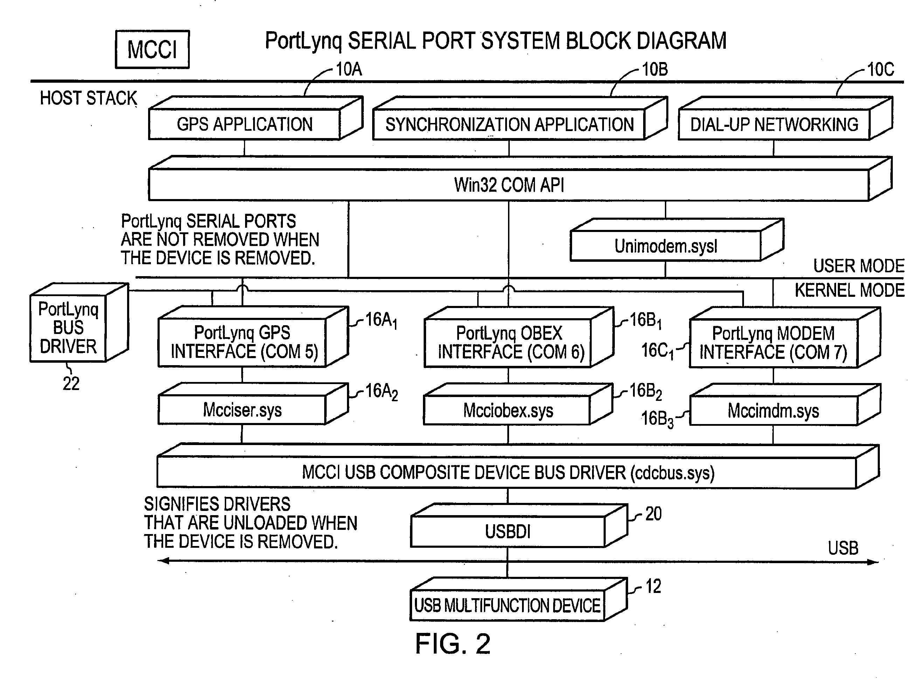

In Fig. 2, which depicts the invention, the various components provide the same functions as the like-numbered components of the system depicted in Fig. 1. However when the system is initialized, i.e. turned on or rebooted, a master driver 22 is also loaded into working memory. Specifically, as in prior arrangements, each peripheral device has an ID number that is retrieved by the system from the device when the latter is detected. This number is ordinarily used by the operating system to select and load into working memory the appropriate driver for that device. In the arrangement depicted in Fig. 2, a separate master driver is loaded on startup for each peripheral device that might be connected in accordance with the invention. Each master driver is loaded into memory on startup and it then registers with the kernel for connection notifications relating to the peripheral device having the ID with which that master driver is associated.

Accordingly, the master driver 22 registers for notifications relating to the peripheral device whose ID is that of the multifunction device 12. When the system starts up, and the device 12 is detected, the master driver 22 responds to the resulting notification by building the function drivers 16A, 16B and 16C. The function driver, in turn, registers with the kernel for notifications relating the connection or disconnection of the peripheral device 12.

In accordance with the invention, the functions of each function driver 16 have been effectively split into two modules: a com port interface part 16A₁, etc., which communicates with an associated application and serves as the com port for that application; and a driver part 16A₂ etc., which provides a link to a peripheral device (a peripheral function in a case of a multi-function peripheral device). The function drivers register with the kernel for device-specific notifications as in the prior arrangements.

Preferably the driver parts 16₁ and 16₂ are physically configured as a single block. Thus, the kernel loads the drivers into the working memory as described above in connection with Fig. 1. However, if a peripheral device is unplugged and the kernel thereupon orders a driver to remove itself, the com port part 16A₁, for example, responds by effectively disconnecting itself from the driver part 16A₂. The application 10A that uses the driver will therefore continue to find the relevant com port in the application interface part 16A₁. The application is thus not disturbed by the removal of the peripheral device. As mentioned above, the application will, of course, be unable to communicate with the peripheral device. However, the interface 16₁ provides appropriate responses to communications from the user application such as to avoid a malfunction that might otherwise occur in the absence of the requisite com port.

If a peripheral device that has been removed is plugged in again or otherwise replaced, the corresponding function driver 16₁ receives a notification of the event and, in response, reconnects itself to the previously disconnected driver part 16₂ so that the corresponding application can communicate with the reconnected device.

Thus I have described a function driver arrangement for use with hot pluggable devices, which accommodates user applications that require access to com ports even after the corresponding peripheral device has been unplugged. Specifically the invention retains in memory the portion of the function driver that provides the com port interface to the application, thus preventing malfunctions that might result from removal of the corresponding com ports.

## Claims

1. A driver system for communication between a user application and a peripheral device function, the system comprising:
A. a master driver for
1. receiving availability notifications relating to a peripheral device, and
2. installing a function driver for the peripheral device,
B. the function driver having an application interface part and a peripheral interface part,
1. the application interface part communicating with a user application and providing a virtual communication port for the application, and
2. the peripheral interface part providing a link to the peripheral device and providing communication between the application interface part and a peripheral function associated with the application,
C. the function driver receiving notification of the removal of the peripheral device, and, in response, retaining the application interface part in memory and removing the peripheral interface part, whereby the application that communicated with a removed peripheral device is still provided with a virtual communication port that provides a response to communications from the application.

## Patentansprüche

1. Treibersystem zur Kommunikation zwischen einer Benutzeranwendung und einer Peripheriegerätefunktion, wobei das System umfasst:
A. einen Mastertreiber zum
1. Empfangen von Verfügbarkeitsmeldungen, die ein Peripheriegerät betreffen, und
2. Installieren eines Funktionstreibers für das Peripheriegerät,
B. der Funktionstreiber einen Anwenderschnittstellenteil und einen Peripherieschnittstellenteil aufweist,
1. der Anwenderschnittstellenteil mit einer Benutzeranwendung kommuniziert und einen virtuellen Übertragungskanal für die Anwendung bereitstellt, und
2. der Peripherieschnittstellenteil ein Verknüpfungsglied zu dem Peripheriegerät bereitstellt und Kommunikation zwischen dem Anwenderschnittstellenteil und einer mit der Anwendung verknüpften Peripheriefunktion bewirkt,
C. der Funktionstreiber eine Meldung der Entnahme des Peripheriegerätes empfängt und, als Reaktion, den Anwenderschnittstellenteil abspeichert und den Peripherschnittstellenteil entfernt, wodurch die Anwendung, die mit einem entnommenen Peripheriegerät kommuniziert hat, noch mit einem virtuellen Übertragungskanal versehen ist, der eine Reaktion auf Kommunikationen von der Anwendung bewirkt.

## Revendications

1. Système pilote pour une communication entre une application utilisateur et une fonction de dispositif périphérique, le système comprenant:
A) un pilote maître pour
1) recevoir des notifications de disponibilité concernant un dispositif périphérique, et
2) installer un pilote de fonction pour le dispositif périphérique,
B) le pilote de fonction ayant une partie formant interface d'application et une partie formant interface de périphérique,
1) la partie formant interface d'application fournissant un port de communication virtuel pour l'application, et
2) la partie formant interface périphérique fournissant un lien vers le dispositif périphérique et fournissant une communication entre la partie formant interface d'application et une fonction périphérique associée à l'application,
C) le pilote de fonction recevant une notification de l'enlèvement du dispositif périphérique et, en réponse, conservant la partie formant interface d'application en mémoire et supprimant la partie formant interface de périphérique, grâce à quoi l'application qui assurait la communication avec un dispositif périphérique supprimé est encore prévue avec un port de communication virtuel qui fournit une réponse à des communications provenant de l'application.
